# EUROPEAN PATENT SPECIFICATION

(11) **EP 1 204 352 B1**
(45) Date of publication and mention of the grant of the patent: **05.11.2003**
(21) Application number: 00954083.2
(22) Date of filing: 14.08.2000
(51) Int. Cl.: A47J 31/00, A47J 31/40, A23F 5/24, G07F 13/06

(54) **METHOD UTILIZING DELAYED DILUTION, MIXING AND FILTRATION FOR PROVIDING CUSTOMIZED BEVERAGES ON DEMAND**
VERFAHREN ZUM BEREITSTELLEN VON INDIVIDUELLEN GETRÄNKEN AUF ANFRAGE, UNTER VERWENDUNG VON VERZÖGERTER VERDÜNNUNG, MISCHUNG UND FILTRIERUNG
PROCEDE A DILUTION, MELANGE ET FILTRAGE DIFFERES SERVANT A PRODUIRE DES BOISSONS PERSONNALISEES SUR DEMANDE

(30) Priority: 14.08.1999 US 148984 P
(43) Date of publication of application: 15.05.2002
(60) Divisional application: 03102519.0
(73) Proprietor: THE PROCTER & GAMBLE COMPANY, Cincinnati, Ohio 45202 (US)
(72) Inventor: GUTWEIN, Roger, William, Cincinnati, OH 45239 (US); CONNOR, Christopher, Ward, Cincinnati, OH 45231 (US)
(74) Representative: Kremer, Véronique
(86) International application number: US0022345
(87) International publication number: WO01012039

(56) References cited:
- EP-A- 0 079 235
- US-A- 3 582 351
- US-A- 4 579 048
- US-A- 5 740 719
- US-A- 5 803 320

## Description

The present invention is directed to methods to provide consumers (at home or away from home) quantities of ready-to-drink beverages, especially brewed coffee and tea and coffee and tea drinks (lattes, cappuccinos, chai teas, etc.). The consumer may customize a type of selection of beverage and various characteristics thereof, based upon his/her taste preferences; the serving of ready-to-drink beverage will be provided to the consumer.

The "delayed dilution" aspects of the present invention may be used to accommodate the individual consumers taste preferences by utilizing multiple varieties of specific types of beverage (e.g., more than one selection of coffee andlor tea), as well as different varieties or tea or coffee (roast strength, grind selection, plant andlor bean variety) in the brewing system. The "delayed dilution" aspects may also be used to deliver varieties of beverage options by using the undiluted concentrate/extract to mix/dissolve other beverage compounds or flavors to make chai-teas, cappuccinos, lattes, etc., with minimal dilution to the final beverage. The "delayed mixing" aspect of the present invention may be utilized to accommodate consumers' taste preferences by taking separated selected extractions of the brew and diluting appropriate fraction(s) in accordance with the consumer's preferences. The "delayed filtering" aspects of the present invention may be utilized to accommodate various consumer preferences by offering variations in processing that would impact various aspects of body and character to accommodate a wide range of consumer taste preferences.

By providing a high volume system for making ready-to-drink beverages and dispensing successive individually customized servings thereof, the invention is particularly desirable in the restaurant, (especially fast food) environments, as well commercial and industrial settings (office buildings, workplaces, hospitals, and the like, with large waiting areas

This invention may also be used in household environments where it may be desirable to make several different types of finished beverage products tailored to the taste preferences of several household members. Because these many variations may be made from earlier, initial brew(s), the variations of the same type of beverage (e.g., coffee vs. tea) can be provided immediately upon each individual selection.

### BACKGROUND OF THE INVENTION

Much study has been given to the most satisfactory way to brew beverages such as coffee and tea and it is a fact that an excellent grade of coffee or tea can be effectively ruined for consumption by improper methods of preparation of the ready-to-drink product. In general, a high quality and most satisfying coffee or tea drink is obtained only when it possesses fine characteristic aroma, delicacy of characteristic flavor, and fullness of characteristic body.

Also importantly, many consumers have come to appreciate the many various options available with respect to coffee and tea products (e.g., variations in strength, varietal type, creaminess, flavors) and there are a wide variety of coffee options (lattes, espressos, cappuccinos, etc.) and tea options (regular tea, creamy tea, chai-tea and green teas). However, especially in a commercial/industrial setting (e.g., restaurant, fast-food industry, workplace, hospitals), there are many hurdles (e.g., space, difficulty, time, and/or inconvenience) to be overcome in delivering, especially on demand, the preferred choice of beverage to a wide range of consumers.

Additionally, most individual households comprise family members with various taste. preferences; heretofore, it has been, at best, cumbersome and bothersome to address individual preferences, and would require many different brewing cycles and many different receptacles to accommodate mixing of different fractions and types. It would be desirable to employ one (or at least a minimal number of) extracts in a single countertop station to efficiently accommodate various taste preferences, on demand, in a household environment.

One particularly preferred aspect of the present invention is coffee beverages. Coffee beverages comprise an aqueous solution of the water-soluble (and sometimes insoluble) constituents of the roasted and ground beans of the tree of the family Rubiaciae. There are many varieties of this plant, but the two having the most significance commercially is Caffee arabica and Caffea canephora (robusta).

Equipment for brewing beverages such as coffee, tea, and the like have typically been of the "single station" type, in which an empty carafe or pot is positioned on a heating element below a receptacle or brewing funnel which contains a measured quantity of dry beverage-making material, e.g. roast and ground coffee or tea leaves. Hot water is then passed through the material to extract the essential oils, flavor and body that make up the beverage, and then drains downwardly through an opening in the funnel into the pot or carafe. If and when a second pot or carafe of beverage is needed, the first must be moved to a separate heating element or plate.

Although such prior beverage brewers work satisfactorily for making relatively small quantities of beverage, in restaurants and other commercial and institutional establishments, there is a continuing need for equipment to make large quantities of brewed beverage, but be able to instantaneously accommodate the taste preferences of a wide variety of consumers; furthermore, this equipment must be easy to use and relatively automatic so as not to require an unreasonable amount of personal attention during the brewing cycle. The needs of restaurants, institutions and other commercial establishments are of particular concern in regard to equipment for brewing and making an acceptable cup of coffee to an individual consumer, given the limitations of space, labor, and time.

Some currently available beverage brewing devices provide essentially instantaneous hot water to brew beverages in a short amount of time. These devices typically have a hot water reservoir which maintains a volume of water at a predetermined temperature. A cold water fill tube is attached inside the reservoir, with one end close to, but not abutting, the bottom of the hot water reservoir, of a separate cold water reservoir or basin positioned above the heated reservoir. A hot water discharge tube has one end positioned in the hot water reservoir near an outlet zone generally at the top of the hot water reservoir. Another end of the discharge tube delivers hot water transported through the tube to a beverage brewing substance in order to produce a brewed beverage concentrate.

In order to brew a beverage in a beverage brewing device as described above, cold water is poured into the basin. The cold water flows through the cold water fill tube and accumulates at the bottom of the hot water reservoir due to temperature variations between the cold and hot water. The hot water is displaced by the cold water and moves upwardly towards the top of the hot water reservoir, which is sealed by a cover, and through the hot water discharge tube. Upon being dispensed into a beverage brewing substance, the hot water and beverage brewing substance create a brewed beverage concentrate. (For examples of representative instantaneous hot water beverage brewing apparati, see U.S. 3,385,201 to Martin, U.S. 4,920,871 to Anson, and U.S. 5,025,714 and U.S. 5,113,752, both to Brewer.), See also US-A-3 582 351.

Dilution of the brewed extract/concentrate is necessary in order to prevent the brewed extract/concentrate from being too strong as well as preventing an additional manual step of diluting the extract/concentrate after it has been brewed. Dilution of the brewed concentrate is achieved by feeding water from the basin to either the brewing funnel and allowing it to pass through the grounds/leaves or the area between the inner brewing funnel and the outer brewing funnel.

It is generally desirable to provide equipment which requires minimum maintenance by the employees. It is preferable to provide equipment which will make a sufficient volume of brew to meet the customer demands without over-producing, but in adequate quantities which can be replenished within a reasonable time with minimum attention by the employees. Additionally, and desirably, the equipment should usually be compact.

It is, therefore, desirable to provide a beverage-brewing system which will allow a consumer to customize their preferred variety of beverages from a virtually endless selection of possibilities; the system of the present invention will provide an individually customized serving of beverage delivered at the desired temperature and ready to drink.

### SUMMARY OF THE INVENTION

Accordingly, it is a general object of the present invention to provide an improved system for providing an individually customized brewed ready-to-drink beverages to a consumer, in a wide range of types, varieties, and/or strengths.

It is a further object of the present invention to provide a brewing system for making varieties of brewed beverages, in particular variety, body, character and/or strengths as chosen by multiple individual consumers with the system being easy to use, by the consumer or other individual (e.g., restaurant wait staff) obtaining the customized beverage. Further, the maintenance of the subject equipment requires only a small amount of personal attention by the owner/operator of the equipment.

A general object of the present invention is to utilize "delayed dilution" of a concentrate extract to provide a beverage brewing system which immediately (upon customer selection) provides selective dilution (based on individual consumer's selections) of a beverage extract after the extract has been allowed to brew and held as an extract before dilution.

It is also a general object of the present invention to utilize the undiluted extract to mix and dissolve other beverage compounds to make flavored coffees and teas , cappuccinos, lattes, creamy coffees and teas, chai teas, green teas, and the like.

It is also a general object of the present invention to utilize aspects of "delayed mixing" and/or "delayed filtering" to accommodate various consumer preferences regarding body character and consistency of the finished beverage, especially coffee-type beverages.

It is also a general object of the present invention to provide a brewed beverage delivery system which allows a consumer to select from various classifications of beverages and customize said selection according to that consumer's preferences.

### DETAILED DESCRIPTION OF THE INVENTION

Reference will now be made in detail to various embodiments of the invention.

The present invention is directed to a method for the individual customization of ready to drink brewed beverage products for multiple consumers, as well as the provision of the customized ready to drink beverages after consumer input The method of the present invention comprises three basic steps: collecting information from a consumer regarding the consumer's desires as to the type and character of beverage he/she desires at that point in consumption; a system linking the consumer's choice of product to a beverage delivery system which contains an amount of extract/concentrate and areas in the beverage delivery system(s) to accommodate aspects of delayed dilution, mixing and filtration. The method of the present invention utilizes the aspects of delayed dilution, "delayed mixing" and "delayed filtration" to further increase the options of beverage deliverable, on demand, to the individual consumer based upon their preferences.

### A Definition

As used herein the terms "brewed beverage products" and "fresh-brewed beverage products" refers to coffees and teas.

As used herein, the terms "extract" and "concentrate" are used interchangeably, unless where otherwise specified. Within the context of the present invention - providing individually customized beverages on demand to consumer - it does not matter whether an extract or concentrate is used. "Fresh brewed" extracts are certainly acceptable, but are not required. In one embodiment, the roast and ground coffee is contained in pods or sachets that are inserted into the brewing chamber. An example of this type of pod is the "K-Cup", manufactured by Keurig, Inc. and disclosed in U. S. Patent Numbers 5,325,765 and 5,840,189.

Additional varieties of beverage products may be made but when the "customized variety-on-demand" aspects of the present invention are used (delayed dilution, delayed mixing and/or delayed filtration), a customized beverage product can be delivered, that used either extracts or concentrates as starting material. The terms "extract," "concentrate," "extract/concentrate," and "concentrate/extract" includes "brews," concentrates, "toddies," infusions, and the like.

The term "fresh-brewed" as used herein refers to beverage concentrates/extracts which have been extracted and held for a "hold-time" and no more than about 48 hours.

As used herein, "coffee beverages" include cappuccinos, espressos, lattes, flavored coffee beverages, creamy coffee beverages, and other coffee-based beverages which are derivatives and/or variants of the above.

As used herein "tea beverages" include tea, green teas, herbal teas, flavored tea, chai teas, and creamy teas, and other tea-based beverages which are derivatives and/or variants of the above.

As used herein the terms "ready-to-serve beverage" and "ready-to-drink beverage" are used interchangeably to refer to beverage products that are in a ready-to-use, consumable form, and other coffee and/or tea-based beverages which are derivatives and/or variants of the above. They are made from coffee extracts or tea extracts and can also include dry mixes, powders, liquids, extracts, concentrates, and emulsions, in a wide variety of formulations.

The term "beverage type" as used herein means coffee or tea.

The term "classifications" as used herein means characteristics or attributes of certain types of beverage and include temperature, strength, body (full or light), roast (color or degree), acidity, sweetness, bitterness, and/or mouthfeel.

The term "variety" means country of origin (grown) and/or specific grown region (e.g., varietal), including harvesting and post-harvesting techniques within a given species or a species within a genus. The fineness of the grind exerts an influence on the (quality) flavor as well as the degree of extraction (quantity). Coffee beans useful in the present invention can be either of a single type or grade of bean or can be formed from blends of various bean types or grades, and can be undecaffeinated or decaffeinated. These high-grown-type beans are typically referred to as high grade coffees. Suitable high grade coffee having high acidity include Arabicas and Colombians characterized as having "excellent body," "acid," "fragrant," "aromatic" and occasionally "chocolatey." Examples of typical high quality coffees are "Milds" often referred to as high grade Arabicas, and include among others Colombians, Mexicans, and other washed Milds such as strictly hard bean Costa Rica, Kenyas A and B, and strictly hard bean Guaternalans.

The term "hold-time" means that period of time beginning with the onset of brewing of the extract and ending when dispensed to the consumer.

As used herein, the term "comprising" means that the various coffees, other ingredients, or steps, can be conjointly employed in practicing the present invention. Accordingly, the term "comprising" encompasses the more restrictive terms "consisting essentially of" and "consisting of."

All ratios and percentages herein are based on weight unless otherwise specified.

### B. Making the Beverage Extract/Concentrate

Almost universally, the extract is brewed by contacting the roasted and ground coffee with hot water at a temperature from moderately-below boiling to moderately-above boiling, for a predetermined brewing time, separating the extract (including the solutes) from the insolubles, and consuming the resulting beverage.

Brewing methods can generally be categorized in three broad groups: (1) single-pass infusions in which the water is percolated or pumped through the roasted and ground coffee (which may partially serve as its own filter) then filtered through a metal, paper, or cloth sieve; (2) percolation methods which recycle the extract through one or more volumes of grind consecutively, in either a co-current or counter-current flow, before the extract is siphoned off at the requisite strength; and (3) batch-slurry methods in which a fixed volume of coffee is mixed with a fixed volume of water in a brewing vessel, permitted to steep with or without agitation, then filtered or mechanically separated to produce the extract.

Systems providing brewed beverages, especially coffee or tea, have typically been of the "single station" type, in which an empty carafe or pot is positioned on a heating element below a receptacle or brewing funnel which contains a measured quantity of dry beverage-making material, e.g. ground coffee or tea leaves. Hot water is then passed through the material to extract the essential oils, flavor and body that make up the beverage, and then drains downwardly through an opening in the funnel into the pot or carafe. If and when a second pot or carafe of beverage is needed, the first must be moved to a separate heating element or plate. Although such prior beverage brewers work satisfactorily for making relatively small quantities of beverage, in restaurants and other commercial and institutional establishments, there is a continuing need for equipment to make large quantities of beverages which is easy to use and relatively automatic so as not to require an unreasonable amount of personal attention during the brewing cycle.

A method for brewing a tea extract is disclosed in U.S., 4,757,752 to Robbins (assigned to General Foods Corp.), issued June 19, 1988.

Any extract/concentrate which is generally available can be used in the practice of the method of the present invention. In one embodiment, the roast and ground coffee is contained in pods or sachets that are inserted into the brewing chamber. An example of this type of pod is the "K-Cup", manufactured by Keurig, Inc. and disclosed in U. S. Patent Numbers 5,325,765 and 5,840,189.

While several embodiments of the present invention have been described, it is not intended to thereby limit the present invention. Rather, it will be obvious to those skilled in the art that various changes and modifications can be made without departing from the scope of the invention. It is intended, therefore, to cover in the appended claims all such changes and modifications that are within the scope of this invention.

The method of the present invention offers customization of a brewed beverage based upon consumer selection. This is provided by utilization of delayed dilution, delayed mixing, or delayed filtering of a beverage extract.

### C. Delayed Dilution

As used herein, the term "delayed dilution" refers to the aspect of holding the brewed (preferably fresh brewed) beverage (preferably coffee) extract for a minimum period of about 5 minutes, preferably of about 15 minutes, more preferably of about 30 minutes. In a preferred mode, "delayed dilution" also refers to the aspect of holding the extract for a maximum period of time of about 48 hours, preferably of about 24 hours, more preferably of about 12 hours, most preferably of about 6 hours.

On particularly preferred embodiment involves the use of fresh brewed coffee extracts: In this embodiment, the fresh brewed extract produced by the process of the present invention has a brew solids of less than about 10%, preferably less than about 5%, more preferably less than about 4%, most preferably less than about 3.5%. In a particularly preferred embodiment of the process of the present invention, the extract has a minimum brew solids of greater than about 1.2%, preferably greater than about 1.5%, most preferably greater than about 2%.

It is important to recognize that a key aspect of one of the embodiments of the present invention allows customization of the preferred coffee just prior to dispensing; there is no predetermination of characters or strength as is seen with many automated systems. The "delayed dilution" aspect allows multiple servings of individually tailored coffee to be prepared from a minimum number of brew cycle(s), preferably one. Additionally, these individually tailored servings are dispensed on demand.

When coffee extracts are used, it is preferred that said dilution ratios will be from about zero (no dilution) to about 1:15 coffee/water, and can be easily varied, utilizing currently available methods, upon receiving the consumer's selection input regarding strength. Also, the temperature of the dilution water may be varied to accommodate individual consumer preferences around consumption temperature; there are several ways that this could readily be accomplished, but one preferred way would be to have two dilution lines; one for hot (170-200°F) and one for cold (40-80°F) water and coordinate their rate and flow to deliver the coffee to each individual consumer at their preferred temperature.

In the practice of one of the preferred embodiments of the present invention, the weight ratio of the extraction portion of water to dry, roast and ground coffee is from about 5:1 to about 24:1; preferably from about 8:1 to about 13:1. When this amount of water is used for (drip) extraction, a relatively strong (meaning concentrated but not bitter) filtered coffee extract is issued. Normally, this extract will have a soluble solids content by weight of greater than about 1.2%, preferably 1.5%. The relatively strong filtered coffee extract is then diluted with a sufficient amount of dilution water to a preferred beverage concentration.

It is important to recognize that a key aspect of a preferred embodiment of the present invention allows selection of the preferred beverage type and classification just prior to dispensing; there is no predetermination of characters or strength as is seen with many automated systems. The "delayed dilution" aspect allows multiple servings of the same beverage type in individually tailored beverages to be prepared from a minimum number of brew cycles, preferably one. Additionally, these individually tailored servings may be dispensed, if desired, on demand.

Clearly, this aspect of the system of the present invention imparts many benefits to the extract that result in a better final beverage for the consumer. For instance, delaying dilution of the extracted beverage removes the need to hold the beverage in a "consumption-ready," i.e., "ready-to-drink", state (e.g., diluted and at the preferred temperature). In the undiluted state, the beverage, particularly coffee, has less water and degrades at a slower rate. Additionally, the need to heat or cool during holding is minimized.

Further, the undiluted extract takes up less space and can be more easily surged in a given physical geometry.

Employing the "delayed dilution" aspect of this present invention results in many benefits to the finished beverage; this ultimately results in less "too old" or "stale" beverage being served. In a particularly preferred embodiment of the present invention, the brewed extract may be cooled or refrigerated. It will be recognized by those skilled in the art that cooling or refrigerating the extract or concentrate will further increase maximum hold times that can still maintain desirable flavor attributes.

### D. Delayed Mixing

In another aspect of the present invention, the beverage extract/concentrate can be automatically fractionated previous to initial, or a subsequent dilution. By mixing various fractions of the extract, the character and body of the resulting beverage can be changed. For example, in coffee, the early fraction will be more acid, "high grown" and less ashy and dirty. The later fractions will be less acid and stronger in bitter ashy dirty flavors. To accommodate various consumer preferences, the coffee beverages could be made from the earlier extract alone, the latter extract alone, or a mix of fractions in various ratios. The potential variety created could cover "high grown" to "low" coffees and could also cover some of the aspects character and body resulting from a degree of roasting.

As used herein, the term "delayed mixing" refers to the aspect of holding the brewed (preferably fresh brewed) beverage (preferably coffee) extract for a minimum period of about 5 minutes, preferably of about 15 minutes, more preferably of about 30 minutes. In a preferred mode, "delayed mixing" also refers to the aspect of holding the extract for a maximum period of time of about 48 hours, preferably of about 24 hours, more preferably of about 12 hours, most preferably of about 6 hours.

It is recognized that novel beverage products could be prepared using this aspect of the present invention. Clearly, some substances that result in character and body appear in initial fractions only (or appear in initial fractions and disappear upon continued heating) while other such substances appear in later fractions only. By mixing fractions and, further, by mixing them in various ratios, a multitude of beverage types can be prepared which have heretofore been unavailable using standard brewing equipment and practices.

### E. Delayed Filtering

The "delayed filtering" aspect of the present invention would allow the beverage extract/concentrate to stay in contact with the coffee grounds or tea leaves during holding of the extract While not wanting to be limited by theory, it is believed that the grounds or leaves would help absorb the reaction compounds during extract storage and would also buffer the acids created during storage. Filtering could also be customized at dispensing, e.g., metal filter vs. paper filter, and could also be in stages (e.g., coarse metal mesh, followed by dilution, and then paper filtering).

As used herein, the term "delayed filtering" refers to the aspect of holding the brewed (preferably fresh brewed) beverage (preferably coffee) extract for a minimum period of about 5 minutes, preferably of about 15 minutes, more preferably of about 30' minutes. In a preferred mode, "delayed dilution" also refers to the aspect of holding the extract for a maximum period of time of about 48 hours, preferably of about 24 hours, more preferably of about 12 hours, most preferably of about 6 hours.

While particular embodiments of the present invention have been described, it would be obvious to those skilled in the art that various other changes and modifications can be made without departing from the scope of the invention.

## Claims

1. A method for making a customized brewed beverage product, **characterized in that** said method comprises the following steps :
a) delaying the dilution of the beverage extract for a minimum period of about 5 minutes after the onset of brewing of the extract; and at least one of
b) delaying the mixing of the beverage extract for a minimum period of about 5 minutes after the onset of brewing of the extract; and
c) delaying the filtering of the beverage extract for a minimum period of about 5 minutes after the onset of brewing of the extract.

2. A method according to Claim 1, **characterized by** performing one or more of said steps a), b), or c) above for a minimum period of about 15 minutes after the onset of brewing of the extract.

3. A method according to Claim 1, **characterized by** performing one or more of said steps a), b), or c) above for a minimum period of about 30 minutes after the onset of brewing of the extract.

4. A method according to claim 1, **characterized by** performing one or more of said steps a), b), or c) above for a maximum period of about 48 hours after the onset of brewing of the extract.

5. A method according to Claim 4, **characterized by** performing one or more of said steps a), b), or c) above for a maximum period of about 24 hours after the onset of brewing of the extract.

6. A method according to Claim 5, **characterized by** performing one or more of said steps a), b), or c) above for a maximum period of about 12 hours after the onset of brewing of the extract.

7. A method according to Claim 1, wherein the brewed/water dilution ratios are from zero to about 1:15.

8. A method according to Claim 4, wherein the brewed/water dilution ratios are from zero to about 1:15.

9. A method according to Claim 1, wherein the brewed beverage is a coffee beverage and the coffee extract has a brew solids of less than about 10%.

10. A method according to Claim 9, wherein the coffee extract has a brew solids of less than about 5%.

11. A method according to Claim 10, wherein the coffee extract has a brew solids of less than about 4%.

12. A method according to Claim 11, wherein the coffee extract has a brew solids of less than about 3.5%.

13. A method according to Claim 4, wherein the brewed beverage is a coffee beverage and the coffee extract has a minimum brew solids of greater than about 1.2%.

14. A method according to Claim 13, wherein the coffee extract has a minimum brew solids of greater than about 1.5%.

15. A method according to Claim 14, wherein the coffee extract has a minimum brew solids of greater than about 2.0%.

## Patentansprüche

1. Verfahren zur Herstellung eines individuell angefertigten gebrühten Getränkeprodukts. **dadurch gekennzeichnet, daß** das Verfahren die folgenden Schritte umfaßt:
a) Verzögern der Verdünnung des Getränkeextrakts für einen minimalen Zeitraum von etwa 5 Minuten nach dem Beginn des Brühens des Extrakts; und mindestens einen aus
b) Verzögern des Mischens des Getränkeextrakts für einen minimalen Zeitraum von etwa 5 Minuten nach Beginn des Brühens des Extrakts; und
c) Verzögern des Filtrierens des Getränkeextrakts für einen minimalen Zeitraum von etwa 5 Minuten nach dem Beginn des Brühens des Extrakts.

2. Verfahren nach Anspruch 1, **gekennzeichnet durch** das Ausführen eines oder mehrerer der obigen Schritte a), b) oder c) für einen minimalen Zeitraum von etwa 15 Minuten nach dem Beginn des Brühens des Extrakts.

3. Verfahren nach Anspruch 1, **gekennzeichnet durch** das Ausführen eines oder mehrerer der obigen Schritte a), b) oder c) für einen minimalen Zeitraum von etwa 30 Minuten nach dem Beginn des Brühens des Extrakts.

4. Verfahren nach Anspruch 1, **gekennzeichnet durch** das Ausführen eines oder mehrerer der obigen Schritte a), b) oder c) für einen maximalen Zeitraum von etwa 48 Stunden nach dem Beginn des Brühens des Extrakts.

5. Verfahren nach Anspruch 4, **gekennzeichnet durch** das Ausführen eines oder mehrerer der obigen Schritte a), b) oder c) für einen maximalen Zeitraum von etwa 24 Stunden nach dem Beginn des Brühens des Extrakts.

6. Verfahren nach Anspruch 5, **gekennzeichnet durch** das Ausführen eines oder mehrerer der obigen Schritte a), b) oder c) für einen maximalen Zeitraum von etwa 12 Stunden nach dem Beginn des Brühens des Extrakts.

7. Verfahren nach Anspruch 1, wobei die Brüh-/Wasserverdünnungsverhältnisse von null bis etwa 1:15 reichen.

8. Verfahren nach Anspruch 4, wobei die Brüh-/Wasserverdünnungsverhältnisse von null bis etwa 1:15 reichen.

9. Verfahren nach Anspruch 1, wobei das gebrühte Getränk ein Kaffeegetränk ist und der Kaffeeextrakt einen Brühfeststoffgehalt von weniger als etwa 10% aufweist.

10. Verfahren nach Anspruch 9, wobei der Kaffeeextrakt einen Brühfeststoffgehalt von weniger als etwa 5% aufweist.

11. Verfahren nach Anspruch 10, wobei der Kaffeeextrakt einen Brühfeststoffgehalt von weniger als etwa 4% aufweist.

12. Verfahren nach Anspruch 11, wobei der Kaffeeextrakt einen Brühfeststoffgehalt von weniger als etwa 3,5% aufweist.

13. Verfahren nach Anspruch 4, wobei das gebrühte Getränk ein Kaffeegetränk ist und der Kaffeeextrakt einen minimalen Brühfeststoffgehalt von größer als etwa 1,2% aufweist.

14. Verfahren nach Anspruch 13, wobei der Kaffeeextrakt einen minimalen Brühfeststoffgehalt von größer als etwa 1,5% aufweist.

15. Verfahren nach Anspruch 14, wobei der Kaffeeextrakt einen minimalen Brühfeststoffgehalt von größer als etwa 2,0% aufweist.

## Revendications

1. Procédé de préparation d'un produit de boisson infusée personnalisé, **caractérisé en ce que** ledit procédé comprend les étapes suivantes :
a) différer la dilution de l'extrait de boisson pendant une période minimale d'environ 5 minutes après le début de l'infusion de l'extrait, et au moins l'une des étapes consistant à
b) différer le mélange de l'extrait de boisson pendant une période minimale d'environ 5 minutes après le début de l'infusion de l'extrait ; et
c) différer le filtrage de l'extrait de boisson pendant une période minimale d'environ 5 minutes après le début de l'infusion de l'extrait.

2. Procédé selon la revendication 1, **caractérisé en ce qu'**on effectue une ou plusieurs desdites étapes a), b), ou c) ci-dessus pendant une période minimale d'environ 15 minutes après le début de l'infusion de l'extrait.

3. Procédé selon la revendication 1, **caractérisé en ce qu'**on effectue une ou plusieurs desdites étapes a), b), ou c) ci-dessus pendant une période minimale d'environ 30 minutes après le début de l'infusion de l'extrait.

4. Procédé selon la revendication 1, **caractérisé en ce qu'**on effectue une ou plusieurs desdites étapes a), b), ou c) ci-dessus pendant une période maximale d'environ 48 heures après le début de l'infusion de l'extrait.

5. Procédé selon la revendication 4, **caractérisé en ce qu'**on effectue une ou plusieurs desdites étapes a), b), ou c) ci-dessus pendant une période maximale d'environ 24 heures après le début de l'infusion de l'extrait.

6. Procédé selon la revendication 5, **caractérisé en ce qu'**on effectue une ou plusieurs desdites étapes a), b), ou c) ci-dessus pendant une période maximale d'environ 12 heures après le début de l'infusion de l'extrait.

7. Procédé selon la revendication 1, dans lequel les rapports de dilution boisson infusée/eau sont de zéro à environ 1:15.

8. Procédé selon la revendication 4, dans lequel les rapports de dilution boisson infusée/eau sont de zéro à environ 1:15.

9. Procédé selon la revendication 1, dans lequel la boisson infusée est une boisson de café et l'extrait de café présente moins d'environ 10 % de solides d'infusion.

10. Procédé selon la revendication 9, dans lequel l'extrait de café présente moins d'environ 5 % de solides d'infusion.

11. Procédé selon la revendication 10, dans lequel l'extrait de café présente moins d'environ 4 % de solides d'infusion.

12. Procédé selon la revendication 11, dans lequel l'extrait de café présente moins d'environ 3,5 % de solides d'infusion.

13. Procédé selon la revendication 4, dans lequel la boisson infusée est une boisson de café et l'extrait de café présente un minimum de solides d'infusion de plus d'environ 1,2 %.

14. Procédé selon la revendication 13, dans lequel l'extrait de café présente un minimum de solides d'infusion de plus d'environ 1,5 %.

15. Procédé selon la revendication 14, dans lequel l'extrait de café présente un minimum de solides d'infusion de plus d'environ 2,0 %.
